# EUROPEAN PATENT APPLICATION

(11) **EP 3 620 855 A1**
(43) Date of publication of application: **11.03.2020**
(21) Application number: 19195555.8
(22) Date of filing: 05.09.2019
(51) Int. Cl.: G03B 21/20, G03B 21/16, G03B 21/18, H04N 9/31

(54) **ILLUMINATION SYSTEM, PROJECTION APPARATUS AND ILLUMINATION CONTROL METHOD**

(30) Priority: 10.09.2018 CN 201811049754
(71) Applicant: Coretronic Corporation, Hsin-Chu 300 (TW)
(72) Inventor: CHOU, CHEN-CHENG, 300 Hsin-Chu (TW); LIAO, JENG-AN, 300 Hsin-Chu (TW); WU, CHUN-HSIEN, 300 Hsin-Chu (TW); KAO, FU-SHUN, 300 Hsin-Chu (TW); CHEN, HUNG-LIN, 300 Hsin-Chu (TW); HUANG, HSIN-CHANG, 300 Hsin-Chu (TW)
(74) Representative: Ter Meer Steinmeister & Partner

(57) **Abstract**

An illumination system, a projection apparatus and an illumination control method are provided. The illumination system includes an excitation light source, an optical component, a light source driver, a temperature sensing module and a controller. The excitation light source emits an excitation light beam. The optical component is located on a transmission path of the excitation light beam. The light source driver is configured to drive the excitation light source. The temperature sensing module is located in a neighboring region of the optical component and configured to sense a temperature of the neighboring region of the optical component to output a sensing voltage. The controller is configured to receive the sensing voltage to determine whether the sensing voltage falls out of a predetermined voltage range and configured to output a control signal to the light source driver to adjust the excitation light beam.

## Description

This application claims the priority benefit of China application serial no. 201811049754.0, filed on September 10, 2018.

### BACKGROUND

### Field of the Invention

The invention relates to an optical system, an optical apparatus including the optical system and a control method. More particularly, the invention relates to an illumination system, a projection apparatus and an illumination control method.

### Description of Related Art

With the increasing application level of laser projection technology, demands for the brightness of a laser projection apparatus have increased, and thus, a laser power used by the laser projection apparatus is also increased. However, due to component aging of the internal optical components in the laser projection apparatus or due to falling-off or collision of machine, a situation that internal optical components of the laser projection apparatus are fractured or damaged may occur. As a result, a laser beam (or an excitation light beam) may fail to be delivered on an expected optical path inside the laser projection apparatus, which may cause damage to other internal components of the laser projection apparatus and impact on user's safety.

The information disclosed in this BACKGROUND section is only for enhancement of understanding of the BACKGROUND section of the described technology and therefore it may contain information that does not form the prior art that is already known to a person of ordinary skill in the art. Further, the information disclosed in the BACKGROUND section does not mean that one or more problems to be resolved by one or more embodiments of the disclosure were acknowledged by a person of ordinary skill in the art.

### SUMMARY

The invention provides an illumination system, a projection apparatus and an illumination control method that can effectively determine whether an optical component disposed in the illumination system is damaged, so as to correspondingly adjust an excitation light beam emitted by an excitation light source.

Other features and advantages of the invention can be further understood by the technical features disclosed in the invention.

The object is solved by the features of the independent claims. Preferred embodiments are given in the dependent claims.

To achieve one, part, or all of the objectives aforementioned or other objectives, an embodiment of the invention provides an illumination system. The illumination system includes an excitation light source, an optical component, a light source driver, a temperature sensing module and a controller. The excitation light source is configured to emit an excitation light beam. The optical component is located on a transmission path of the excitation light beam. The light source driver is electrically connected with the excitation light source. The light source driver is configured to drive the excitation light source. The temperature sensing module is located in a neighboring region of the optical component. The temperature sensing module is configured to sense a temperature of the neighboring region of the optical component to output a sensing voltage. The controller is electrically connected with the light source driver and the temperature sensing module. The controller is configured to receive the sensing voltage to determine whether the sensing voltage falls out of a predetermined voltage range and configured to output a control signal to the light source driver, so as to adjust the excitation light beam by the light source driver.

Preferably, the temperature sensing module may comprise at least one of: a circuit board, located in the neighboring region of the optical component; and a temperature sensor, disposed on the circuit board and configured to sense a temperature of the circuit board to output the sensing voltage.

Preferably, when the circuit board receives at least a part of the excitation light beam, the sensing voltage output via the temperature sensor may be changed.

Preferably, the temperature sensor may comprise a thermistor.

Preferably, the thermistor correspondingly may output the sensing voltage to the controller according to the temperature of the circuit board.

Preferably, the thermistor may be a positive temperature coefficient (PCT) thermistor.

Preferably, when the circuit board receives at least a part of the excitation light beam, the sensing voltage output to the controller via the temperature sensor may be reduced.

Preferably, the thermistor may be a negative temperature coefficient (NTC) thermistor.

Preferably, when the circuit board receives at least a part of the excitation light beam, the sensing voltage output to the controller via the temperature sensor may be increased.

Preferably, the controller correspondingly may control the light source driver according to whether the sensing voltage falls out of the predetermined voltage range, so as to reduce an output power of the excitation light source or turn off the excitation light source.

Preferably, the optical component may be a wavelength conversion component.

Preferably, the wavelength conversion component may be configured to convert the excitation light beam into a conversion beam and reflect the excitation light beam in sequence.

Preferably, the illumination system may further comprise a wavelength conversion component, located on the transmission path of the excitation light beam and configured to receive the excitation light beam emitted by the excitation light source.

Preferably, the wavelength conversion component may be configured to convert the excitation light beam into a conversion beam and allow the excitation light beam to transmit through in sequence.

Preferably, the optical component may be a mirror component.

Preferably, the mirror component may be configured to reflect the excitation light beam transmitting through the wavelength conversion component.

To achieve one, part, or all of the objectives aforementioned or other objectives, an embodiment of the invention provides a projection apparatus. The projection apparatus includes an illumination system, a light valve, and a projection lens. The illumination system is configured to provide an illumination beam. The illumination system includes an excitation light source, an optical component, a light source driver, a temperature sensing module and a controller. The excitation light source is configured to emit an excitation light beam. The optical component is located on a transmission path of the excitation light beam. The light source driver is electrically connected with the excitation light source. The light source driver is configured to drive the excitation light source. The temperature sensing module is located in a neighboring region of the optical component. The temperature sensing module is configured to sense a temperature of the neighboring region of the optical component to output a sensing voltage. The controller is electrically connected with the light source driver and the temperature sensing module. The controller is configured to receive the sensing voltage to determine whether the sensing voltage falls out of a predetermined voltage range and configured to output a control signal to the light source driver, so as to adjust the excitation light beam by the light source driver. The light valve is located on a transmission path of the illuminating beam and configured to convert the illuminating beam to an image beam. The projection lens is located on a transmission path of the image beam and configured to convert the image beam into a projection beam.

To achieve one, part, or all of the objectives aforementioned or other objectives, an embodiment of the invention provides an illumination control method for controlling an illumination system in a projection apparatus. The illumination system includes an excitation light source, an optical component, a light source driver and a temperature sensing module. The light source driver is configured to drive the excitation light source, so as to emit an excitation light beam by the excitation light source. The optical component is located on a transmission path of the excitation light beam. The temperature sensing module is located in a neighboring region of the optical component. The illumination control method includes the following steps: sensing a temperature of the neighboring region of the optical element to output a sensing voltage; receiving the sensing voltage and determining whether the sensing voltage falls out of a predetermined voltage range; and when the sensing voltage falls out of the predetermined voltage range, outputting a control signal to the light source driver, so as to adjust the excitation light beam.

Preferably, the step of sensing the temperature of the neighboring region of the optical component to output the sensing voltage may comprise: when the circuit board receives at least a part of the excitation light beam, sensing a temperature of the circuit board by the temperature sensor to output the sensing voltage.

Preferably, the step of sensing the temperature of the circuit board by the temperature sensor to output the sensing voltage may comprises: sensing the temperature of the circuit board by a PTC thermistor to output the sensing voltage; and when the sensing voltage falls out of the predetermined voltage range, the step of outputting the control signal to the light source driver to adjust the excitation light beam comprising: when the sensing voltage is lower than the predetermined voltage range, outputting the control signal to the light source driver, so as to reduce an output power of the excitation light source or turn off the excitation light source.

Preferably, the step of sensing the temperature of the circuit board by the temperature sensor to output the sensing voltage may comprises: sensing the temperature of the circuit board by a NTC thermistor to output the sensing voltage; and when the sensing voltage falls out of the predetermined voltage range, the step of outputting the control signal to the light source driver to adjust the excitation light beam comprising: when the sensing voltage is higher than the predetermined voltage range, outputting the control signal to the light source driver, so as to reduce an output power of the excitation light source or turn off the excitation light source.

To sum up, the embodiments of the invention can achieve at least one of the following advantages or effects. In the embodiments of the invention, the temperature sensing module can be disposed in the neighboring region of the optical component configured to transmit the excitation light beam inside the illumination system and the projection apparatus, so as to effectively monitor whether the optical component is fractured or damaged by the temperature sensing module. In this way, a user can safely operate the illumination system and the projection apparatus of the invention. Moreover, by the illumination control method provided by the embodiments of the invention, whether the excitation light beam transmitted in the illumination system and the projection apparatus is delivered on an unexpected optical path can be monitored to instantly know whether the optical component which transmits the excitation light beam is fractured or damaged, so as to correspondingly adjust the excitation light beam.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a functional block diagram of an illumination system according to an embodiment of the invention.
FIG. 2 is a schematic diagram of a projection apparatus according to an embodiment of the invention.
FIG. 3 is a schematic diagram of a projection apparatus according to another embodiment of the invention.
FIG. 4 is a flow chart of an illumination control method according to an embodiment of the invention.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

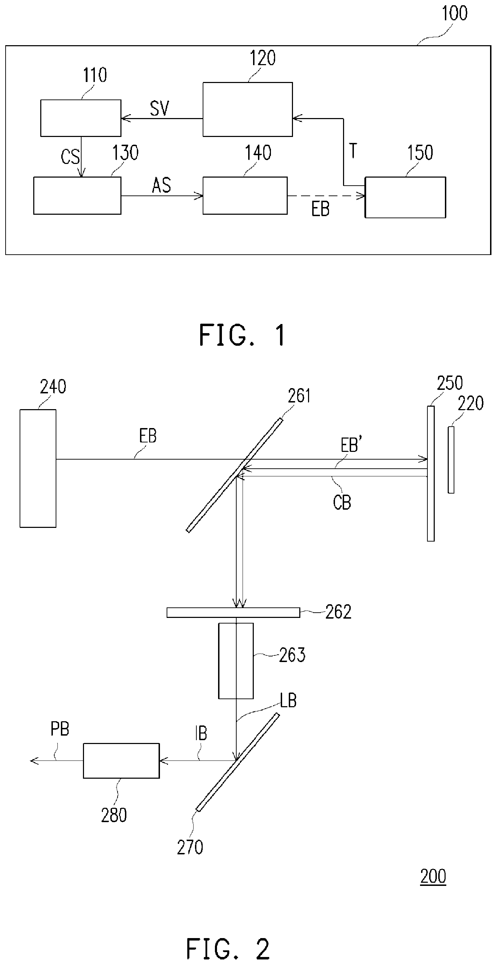

FIG. 1 is a functional block diagram of an illumination system according to an embodiment of the invention. Referring to FIG. 1, an illumination system 100 includes a controller 110, a temperature sensing module 120, a light source driver 130, an excitation light source 140 and an optical component 150. In the embodiment, the controller 110 is electrically connected to the temperature sensing module 120 and the light source driver 130. The light source driver 130 is electrically connected to the excitation light source 140 and configured to drive the excitation light source 140. The excitation light source 140 is configured to emit an excitation light beam EB, and the optical component 150 is located on a transmission path of the excitation light beam EB. In the embodiment, the light source driver 130 may include a laser diode driving circuit, and the excitation light source 140 may include a plurality of laser diodes arranged in an array, but the invention is not limited thereto. In the embodiment, the optical component 150 may be a component capable of reflecting or refracting light, for example, a mirror or a reflective wavelength conversion component.

In the embodiment, the temperature sensing module 120 is disposed in a neighboring region of the optical component 150 and configured to sense a temperature T of the neighboring region of the optical element 150 to output a sensing voltage SV to the controller 110. The controller 110 is configured to receive the sensing voltage SV to determine whether the sensing voltage falls out of a predetermined voltage range and configured to output a control signal CS to the light source driver 130. In the embodiment, the light source driver 130 adjusts a driving signal AS for driving the excitation light source 140 according to the control signal CS, so as to correspondingly adjust the excitation light beam EB.

In the embodiment, the controller 110 may be a microcontroller unit (MCU), a central processing unit (CPU) with signal processing capability or any other general or specific purpose programmable microprocessor, a digital signal processor (DSP), a programmable controller, an application specific integrated circuit (ASIC), a programmable logic device (PLD) or other similar processing devices, or a combination of these devices. In the embodiment, the controller 110 may analyze the sensing voltage SV provided by the temperature sensing module 120 to correspondingly adjust the excitation light beam EB output by the excitation light source 140 according to a voltage change result of the sensing voltage SV.

In the embodiment, the temperature sensing module 120 may include a circuit board and a temperature sensor. The circuit board may be disposed in the neighboring region of the optical component 150, and the temperature sensor may be disposed on the circuit board, wherein the neighboring region may be a rear region or a peripheral region of the optical component 150. In the embodiment, the circuit board may include a thermally conductive metal material layer. Specifically, when the optical component 150 is fractured or damaged, the excitation light beam EB transmitted to the optical component 150, due to the fracture or damage of the optical component 150, may penetrate, be refracted or be scattered through the damaged or fractured part of the optical component 150 to the rear region or the peripheral region of the optical component 150. Thus, when the circuit board disposed in the neighboring region of the optical component 150 receives the excitation light beam EB penetrating, refracted or scattered through the damaged or fractured part of the optical component 150, the temperature sensor may effectively sense a temperature rise of the thermally conductive metal material layer of the circuit board.

In the embodiment, the temperature sensor may further include a thermistor or a temperature fuse. Taking the thermistor as an example, the thermistor may correspondingly output the sensing voltage SV to the controller 110 according to the temperature T of the circuit board. In the embodiment, the thermistor may be a positive temperature coefficient (PTC) thermistor or a negative temperature coefficient (NTC) thermistor. For example, the thermistor may be electrically connected between a power and the controller 110. When the illumination system 100 is turned on, the power may provide a fixed voltage signal to the thermistor, which is then provided to the controller 110 via the thermistor (to serve as the sensing voltage SV). However, if the optical component 150 is fractured or damaged, the temperature T of the circuit board rises, which causes a change to an resistance of the thermistor. Thus, the voltage signal transmitted through the thermistor will correspondingly increase or decrease due to a voltage difference caused by the change in the resistance value of the thermistor, such that the voltage signal received by the controller 110 may be changed in the same way. That is to say, the controller 110 may effectively determine whether a light leakage situation occurs due to the occurrence of the fracture or the damage of the optical component 150 according to whether the voltage signal provided via the thermistor falls out of the predetermined voltage range.

Furthermore, in a case that the thermistor is a PTC thermistor, when the circuit board receives at least a part of the excitation light beam EB, the resistance of the thermistor is increased along with the temperature T, and the sensing voltage SV output to the controller 110 via the thermistor is reduced. That is to say, the controller 110 of the embodiment may correspondingly control the light source driver 130 according to whether the sensing voltage SV is lower than the predetermined voltage range, so as to reduce an output power of the excitation light source 140 or turn off the excitation light source 140. In a case that the thermistor is a NTC thermistor, when the circuit board receives at least a part of the excitation light beam EB, the resistance of the thermistor is decreased along with the temperature T, and the sensing voltage SV output to the controller 110 via the thermistor is increased. That is to say, the controller 110 of the embodiment may correspondingly control the light source driver 130 according to whether the sensing voltage SV is higher than the predetermined voltage range, so as to reduce the output power of the excitation light source 140 or turn off the excitation light source 140.

Additionally, the aforementioned temperature sensor may also include a temperature fuse, wherein the temperature fuse may be disposed on the circuit board. When the optical component 150 is fractured or damaged, which causes the circuit board to receive at least a part of the excitation light beam EB, if a voltage or a current transmitted through the temperature fuse is too large and cause a metal wire in the temperature fuse to be blown or broken and return the sensing voltage SV to zero, the controller 110 may directly turn off the excitation light source 140 according to the change of the sensing voltage SV, thereby providing an immediate protection effect.

FIG. 2 is a schematic diagram of a projection apparatus according to an embodiment of the invention. Referring to FIG. 2, a projection apparatus 200 includes a temperature sensing module 220, an excitation light source 240, a wavelength conversion component 250, a light-splitting component 261, a filter component 262, a light homogenizing component 263, a light valve 270 and a projection lens 280. In the embodiment, the excitation light source 240 is configured to provide the excitation light beam EB to the light-splitting component 261, and the excitation light beam EB is transmitted to the wavelength conversion component 250 via the light-splitting component 261. In the embodiment, the light-dividing component 261 may be a beam splitter (BS). The filter component 262 may be a filter wheel. The light homogenizing component 263 may be an integrator rod. The wavelength conversion component 250 may be, for example, a reflective phosphor wheel. The light valve 270 may also be a digital micro-mirror device (DMD), a liquid-crystal-on-silicon (LCOS) panel, a transmissive liquid crystal panel or other beam modulators.

In the embodiment, the wavelength conversion component 250 is configured to convert the excitation light beam EB into a conversion beam CB and reflect the excitation light beam EB to form a excitation light beam EB' in sequence.

The conversion beam CB and the reflected excitation light beam EB' are further transmitted in order to the filter component 262 and the light homogenizing component 263. The filter component 262 and the light homogenizing component 263 are configured to cause the conversion beam CB and the excitation light beam EB' to form an illumination beam LB sequentially, and configured to provide the illumination beam LB to the light valve 270. The light valve 270 is configured to form an image beam IB by the illumination beam LB and provide the image beam IB to the projection lens 280. The projection lens 280 is configured to cause the image beam IB to form a projection beam PB.

In the embodiment, the projection apparatus 200 may further include a controller (not shown) and a light source driver (not shown), wherein technical features related to the controller and the light source driver of the embodiment may refer to the above embodiment illustrated in FIG. 1. That is to say, the projection apparatus 200 of the embodiment may be implemented in conjunction with other circuit elements of the illumination system 100 of the embodiment of FIG. 1. In the embodiment, the optical component 150 illustrated in FIG. 1 may be the wavelength conversion component 250, the temperature sensing module 220 may be disposed in a neighboring region of the wavelength conversion component 250, the temperature sensing module 220 may be electrically connected with the power to receive the fixed voltage signal provided by the power, and the temperature sensing module 220 may correspondingly provide a sensing voltage to the controller according to the fixed voltage signal. That is to say, the projection apparatus 200 of the embodiment may effectively monitor whether the wavelength conversion component 250 is fractured or damaged by the temperature sensing module 220 disposed in the neighboring region of the wavelength conversion component 250.

In particular, in order to effectively monitor whether the wavelength conversion component 250 is fractured or damaged, the temperature sensing module 220 may be disposed in the rear region or the peripheral region of the wavelength conversion component 250, for example, in the rear region of the wavelength conversion component 250, as illustrated in FIG. 2, but the invention is not limited to the embodiment illustrated in FIG. 2. In the embodiment, the temperature sensing module 220 may include, for example, a circuit board and a temperature sensor, and the circuit board may include a thermally conductive metal material layer. That is to say, when the projection apparatus 200 starts to operate, if the wavelength conversion component 250 is fractured or damaged, the excitation light beam EB transmitted to the wavelength conversion component 250, due to the fracture or the damage of the wavelength conversion component 250, may penetrate, be refracted or be scattered to the rear region or the peripheral region of the optical component 250 through the damaged or fractured part of the optical component 250.

As such, when the thermally conductive metal material layer of the temperature sensing module 220 disposed in the neighboring region of the wavelength conversion component 250 receives the excitation light beam EB penetrating, refracted or scattered through the damaged or fractured part of the wavelength conversion component 250, a temperature rise situation occurs to the thermally conductive metal material layer of the temperature sensing module 220 irradiated by the excitation light beam EB penetrating, refracted or scattered through the fractured or damaged part of the wavelength conversion component 250, and the sensing voltage output by the temperature sensing module 220 may be correspondingly changed. Thus, the controller of the embodiment may determine whether the sensing voltage is changed and falls out of the predetermined voltage range, so as to determine whether to reduce the output power of the excitation light source 240 or turn off the excitation light source 240.

In addition, sufficient teaching, suggestion and implementation description related to features, technical details or implementation manner with respect to other circuit components of the embodiment may refer to the description related to the embodiment illustrated in FIG. 1 and thus, will not be repeated.

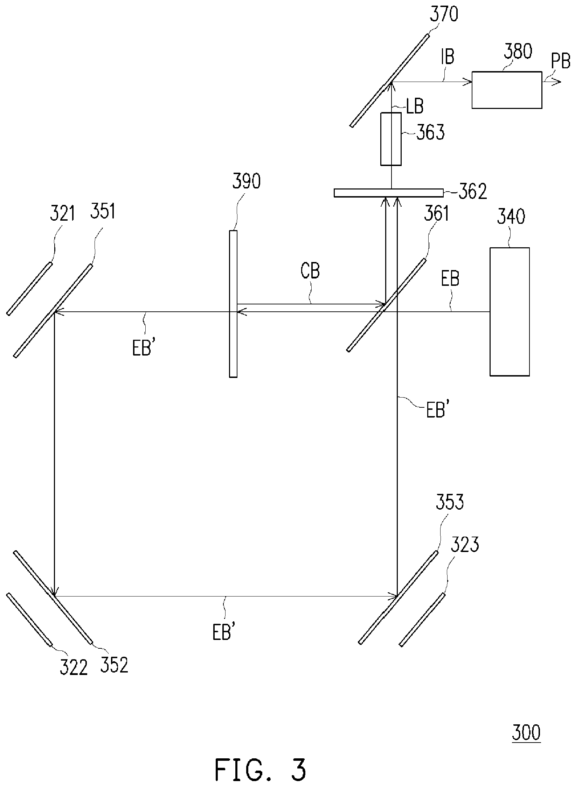

FIG. 3 is a schematic diagram of a projection apparatus according to another embodiment of the invention. Referring to FIG. 3, a projection apparatus 300 includes a plurality of temperature sensing modules 321-323, an excitation light source 340, a plurality of mirrors 351-353, a light-splitting component 361, a filter component 362, a light homogenizing component 363, a light valve 370, a projection lens 380 and a wavelength conversion component 390. In the embodiment, the excitation light source 340 is configured to provide the excitation light beam EB to the light-splitting component 361, and the excitation light beam EB is transmitted to the wavelength conversion component 390 via the light-splitting component 361. In the embodiment, the light-splitting component 361 may be a beam splitter (BS). The filter component 362 may be a filter wheel. The light homogenizing component 363 may be an integrator rod. The light valve 370 may be a DMD, an LCOS panel, a transmissive liquid crystal panel or other beam modulators. The wavelength conversion component 390 may be, for example, a transmissive phosphor wheel.

In the embodiment, the wavelength conversion component 390 is configured to convert the excitation light beam EB into a conversion beam CB and allow the excitation light beam EB to be transmitted to form a excitation light beam EB' in sequence. The conversion beam CB is reflected to the light-splitting component 361. Then, the conversion beam CB is reflected to the filter component 362 and the light homogenizing component 363 via the light-splitting component 361. The excitation light beam EB' transmitted through the wavelength conversion component 390 is also transmitted to the plurality of mirrors 351-353. The excitation light beam EB' passing through the plurality of mirrors 351-353 is reflected to the light-splitting component 361. The excitation light beam EB' passing through the light-splitting component 361 is transmitted to the filter component 362 and the light homogenizing component 363. The filter component 362 and the light homogenizing component 363 may cause the conversion beam CB and the excitation light beam EB' to form the illumination beam LB sequentially, and configured to provide the illumination beam LB to the light valve 370. The light valve 370 is configured to form the image beam IB by the illumination beam LB and provide the image beam IB to the projection lens 380. The projection lens 380 is configured to cause the image beam IB to form the projection beam PB.

In the embodiment, the projection apparatus 300 may further include a controller (not shown) and a light source driver (not shown), wherein technical features related to the controller and the light source driver of the embodiment may refer to the above embodiment illustrated in FIG. 1. That is to say, the projection apparatus 300 of the embodiment may be implemented in conjunction with other circuit elements of the illumination system 100 of the embodiment of FIG. 1. In the embodiment, the optical component 150 illustrated in FIG. 1 may be the plurality of mirrors 351-353, the temperature sensing modules 321-323 may be respectively disposed in neighboring regions of the plurality of mirrors 351-353, and the temperature sensing modules 321-323 may be electrically connected in series with the power or may be independently electrically connected to the power respectively. Taking the temperature sensing modules 321-323 electrically connected in series with the power for example, the fixed voltage signals provided by the power may be sequentially transmitted through the temperature sensing modules 321-323, such that the temperature sensing modules 321-323 may correspondingly provide a sensing voltage to the controller according to the fixed voltage signal. Taking the temperature sensing modules 321-323 independently electrically connected to the power for example, a plurality of fixed voltage signals provided by the power may be respectively transmitted through the temperature sensing modules 321-323, such that the temperature sensing modules 321-323 may correspondingly provide a plurality of sensing voltages to the controller according to the fixed voltage signals. That is to say, the projection apparatus 300 of the embodiment may effectively monitor whether the mirrors 351-353 are fractured or damaged by the temperature sensing modules 321-323 disposed in the neighboring regions of the plurality of mirrors 351-353.

Specifically, in order to effectively monitor whether the mirrors 351-353 are fractured or damaged, the temperature sensing modules 321-323 may be disposed in rear regions or a peripheral regions of the mirrors 351-353, for example, in the rear regions of the mirrors 351-353 as illustrated in FIG. 3, but the invention is not limited to the embodiment illustrated in FIG. 3. In the embodiment, each of the temperature sensing modules 321-323 may include a circuit board and a temperature sensor, and the circuit board may include a thermally conductive metal material layer. That is to say, when the projection apparatus 300 starts to operate, if at least one of the mirrors 351-353 is fractured or damaged, the excitation light beam EB' transmitted to the fractured or damaged mirror may penetrate, be reflected or be scattered to the rear region or the peripheral region of the fractured or damaged mirror through the fractured or damaged mirror.

As such, when the thermally conductive metal material layer of at least one of the temperature sensing modules 321-323 disposed in the neighboring region of at least one of the corresponding ones of the mirrors 351-353 receives the excitation light beam EB' penetrating, refracted or scattered through the damaged or fractured part of the at least one of the mirrors 351-353, a temperature rise situation occurs to the thermally conductive metal material layer irradiated by the excitation light beam EB' penetrating, refracted or scattered through the fractured or damaged part of the least one of the corresponding ones of the mirrors 351-353. The sensing voltage output by the at least one of the corresponding ones of the temperature sensing modules 321-323 may be changed. Thus, the controller of the embodiment may determine whether the sensing voltage is changed and falls out of the predetermined voltage range, so as to determine whether to reduce an output power of the excitation light source 340 or turned off the excitation light source 340.

In addition, sufficient teaching, suggestion and implementation description related to features, technical details or implementation manner with respect to other circuit components of the embodiment may be obtained by referring to the description related to the embodiment illustrated in FIG. 1 and thus, will not be repeated.

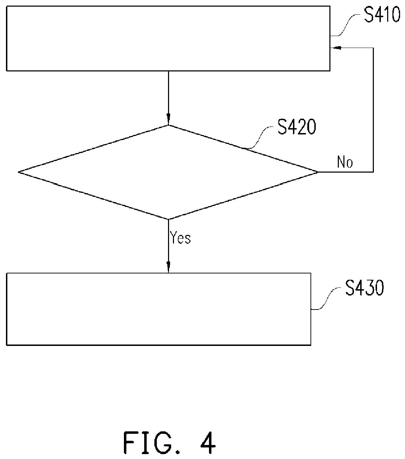

FIG. 4 is a flow chart of an illumination control method according to an embodiment of the invention. Referring to FIG. 1 and FIG. 4, the illumination control method of the embodiment may at least be applied to the illumination system 100 of the embodiment illustrated in FIG. 1. The illumination system 100 includes the controller 110, the temperature sensing module 120, the light source driver 130, the excitation light source 140 and the optical component 150. The illumination system 100 may perform steps S410 to S430. First, when the illumination system 100 is turned on, since the temperature sensing module 120 is disposed in the neighboring region of the optical component 150, in step S410, the temperature sensing module 120 senses the temperature T of the neighboring region of the optical component 150 to output the sensing voltage SV to the controller 110. Then, in step S420, when the controller 110 receives the sensing voltage SV provided by the temperature sensing module 120, the controller 110 may determine whether the sensing voltage SV falls out of the predetermined voltage range, as to determine whether the optical component 150 is fractured or damaged. If no, i.e., when the controller 110 determines that the sensing voltage SV falls within the predetermined voltage range, then return to step S410, where the temperature sensing module 120 continues to sense the temperature and output the voltage. If yes, i.e., when the controller 110 determines that the sensing voltage SV falls out of the predetermined voltage range, then step S430 is performed, where the controller 110 may output a control signal CS to the light source driver 130 to adjust the excitation light beam EB. In other words, when the optical component 150 is fractured or damaged, the illumination control method of the embodiment may immediately reduce the output power of the excitation light source 140, or turn off the excitation light source 140.

Moreover, in addition, sufficient teaching, suggestion and implementation description related to features, technical details or implementation manner with respect to other circuit components of the embodiment may be obtained by referring to the description related to the embodiments illustrated in FIG. 1 to FIG. 3 and thus, will not be repeated.

Based on the above, the embodiments of the invention can achieve at least one of the following advantages or effects. In the embodiments of the invention, the temperature sensing module can be disposed in the neighboring region of the optical component in the illumination system and the projection apparatus, such that when a user operates the illumination system and the projection apparatus, the illumination system and the projection apparatus can instantly monitor whether the optical component configured to transfer the excitation light beam is fractured and damaged. Moreover, when the optical component configured to transfer the excitation light beam is fractured or damaged, the illumination system and the projection apparatus can instantly reduce the output power of the excitation light source or turn off the excitation light source. In this way, the illumination system and the projection apparatus of the invention can provide safe projection function. Moreover, the illumination control method provided by the embodiments of the invention, may instantly monitor whether the excitation light beam transferred in the illumination system and the projection apparatus is delivered on the unexpected optical path, such that whether the optical component configured to transfer the excitation light beam in the illumination system and the projection apparatus is fractured and damaged can be effectively determined, so as to automatically reduce the output power of the excitation light source or turn off the excitation light source. In this way, the illumination control method of the invention can provide safe illumination control function.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims.

## Claims

1. An illumination system, comprising an excitation light source (140, 240, 340), an optical component (150, 250), a light source driver (130), a temperature sensing module (120, 220, 321-323) and a controller (110), wherein:
the excitation light source (140, 240, 340) is configured to emit an excitation light beam (EB);
the optical component (150, 250) is located on a transmission path of the excitation light beam (EB);
the light source driver (130) is electrically connected with the excitation light source (140, 240, 340) and configured to drive the excitation light source (140, 240, 340);
the temperature sensing module (120, 220, 321-323) is located in a neighboring region of the optical component (150, 250) and configured to sense a temperature of the neighboring region of the optical component (150, 250) to output a sensing voltage (SV); and
the controller (110) is electrically connected with the light source driver (130) and the temperature sensing module (120, 220, 321-323), configured to receive the sensing voltage (SV) to determine whether the sensing voltage (SV) falls out of a predetermined voltage range and configured to output a control signal (CS) to the light source driver (130), so as to adjust the excitation light beam (EB) by the light source driver (130).

2. The illumination system according to claim 1, wherein the temperature sensing module (120, 220, 321-323) comprises:
a circuit board, located in the neighboring region of the optical component (150, 250); and
a temperature sensor, disposed on the circuit board and configured to sense a temperature of the circuit board to output the sensing voltage (SV),
wherein when the circuit board receives at least a part of the excitation light beam (EB), the sensing voltage (SV) output via the temperature sensor is changed.

3. The illumination system according to claim 2, wherein the temperature sensor comprises a thermistor, and the thermistor is correspondingly configured to output the sensing voltage (SV) to the controller (110) according to the temperature of the circuit board.

4. The illumination system according to claim 3, wherein the thermistor is a positive temperature coefficient (PCT) thermistor,
wherein when the circuit board receives at least a part of the excitation light beam (EB), the sensing voltage (SV) output to the controller (110) via the temperature sensor is reduced.

5. The illumination system according to claim 3, wherein the thermistor is a negative temperature coefficient (NTC) thermistor,
wherein when the circuit board receives at least a part of the excitation light beam (EB), the sensing voltage (SV) output to the controller (110) via the temperature sensor is increased.

6. The illumination system according to any one of the preceding claims, wherein the controller (110) is correspondingly configured to control the light source driver (130) according to whether the sensing voltage (SV) falls out of the predetermined voltage range, so as to reduce an output power of the excitation light source (140, 240, 340) or turn off the excitation light source (140, 240, 340).

7. The illumination system according to any one of the preceding claims, wherein the optical component (150, 250) is a wavelength conversion component (250), and the wavelength conversion component (250) is configured to convert the excitation light beam (EB) into a conversion beam (CB) and reflect the excitation light beam (EB) in sequence.

8. The illumination system according to any one of the claims 1 to 6, further comprising:
a wavelength conversion component (250), located on the transmission path of the excitation light beam (EB) and configured to receive the excitation light beam (EB) emitted by the excitation light source (140, 240, 340), and the wavelength conversion component (250) is configured to convert the excitation light beam (EB) into a conversion beam (CB) and allow the excitation light beam (EB) to transmit through in sequence,
wherein the optical component (150, 250) is a mirror component, and the mirror component is configured to reflect the excitation light beam (EB) transmitting through the wavelength conversion component (250).

9. A projection apparatus, comprising an illumination system (100) as claimed in any one of the preceding claims, the illumination system is configured to provide an illumination beam (LB), further comprising:
a light valve (270) located on a transmission path of the illumination beam (LB) and configured to convert the illumination beam (LB) into an image beam (IB); and
a projection lens (280) located on a transmission path of the image beam (IB) and configured to convert the image beam (IB) into a projection beam (PB).

10. An illumination control method for controlling an illumination system in a projection apparatus, wherein the illumination system comprises an excitation light source (140, 240, 340), an optical component (150, 250), a light source driver and a temperature sensing module, the light source driver is configured to drive the excitation light source (140, 240, 340) to emit the excitation light beam (EB), the optical component (150, 250) is located on a transmission path of the excitation light beam (EB), and the temperature sensing module is located in a neighboring region of the optical component (150, 250), the illumination control method comprising:
sensing a temperature of the neighboring region of the optical component (150, 250) to output a sensing voltage (SV);
receiving the sensing voltage (SV) and determining whether the sensing voltage (SV) falls out of a predetermined voltage range; and
when the sensing voltage (SV) falls out of the predetermined voltage range, outputting a control signal (CS) to the light source driver (130), so as to adjust the excitation light beam (EB).

11. The illumination control method according to claim 10, wherein the temperature sensing module comprises a circuit board and a temperature sensor, the circuit board is located in the neighboring region of the optical component (150, 250), the temperature sensor is disposed on the circuit board, wherein the step of sensing the temperature of the neighboring region of the optical component (150, 250) to output the sensing voltage comprises:
when the circuit board receives at least a part of the excitation light beam (EB), sensing a temperature of the circuit board by the temperature sensor to output the sensing voltage (SV).

12. The illumination control method according to claim 11, wherein the step of sensing the temperature of the circuit board by the temperature sensor to output the sensing voltage (SV) comprises:
sensing the temperature of the circuit board by a PTC thermistor to output the sensing voltage (SV); and
when the sensing voltage (SV) falls out of the predetermined voltage range, the step of outputting the control signal (CS) to the light source driver (130) to adjust the excitation light beam (EB) comprising:
when the sensing voltage (SV) is lower than the predetermined voltage range, outputting the control signal (CS) to the light source driver (130), so as to reduce an output power of the excitation light source (140, 240, 340) or turn off the excitation light source (140, 240, 340).

13. The illumination control method according to claim 11, wherein the step of sensing the temperature of the circuit board by the temperature sensor to output the sensing voltage (SV) comprises:
sensing the temperature of the circuit board by a NTC thermistor to output the sensing voltage (SV); and
when the sensing voltage (SV) falls out of the predetermined voltage range, the step of outputting the control signal (CS) to the light source driver (130) to adjust the excitation light beam (EB) comprising:
when the sensing voltage (SV) is higher than the predetermined voltage range, outputting the control signal (CS) to the light source driver (130), so as to reduce an output power of the excitation light source (140, 240, 340) or turn off the excitation light source (140, 240, 340).
